# EUROPÄISCHE PATENTSCHRIFT

(11) **EP 1 115 553 B1**
(45) Veröffentlichungstag und Bekanntmachung des Hinweises auf die Patenterteilung: **17.07.2002**
(21) Anmeldenummer: 99969373.2
(22) Anmeldetag: 11.09.1999
(51) Int. Cl.: B29C 59/02, B29C 37/00, B29C 43/22, B29C 43/50

(54) **VERFAHREN ZUR HERSTELLUNG EINES OBERFLÄCHENSTRUKTURIERTEN, FOLIENARTIGEN HALBZEUGS MIT DRUCKANWENDUNG**
METHOD FOR PRODUCING A SURFACE-STRUCTURED, FILM-LIKE SEMIFINISHED PRODUCT WITH THE APPLICATION OF PRESSURE
PROCEDE DE PRODUCTION D'UN PRODUIT SEMI-FINI PELLICULAIRE STRUCTURE EN SURFACE, AVEC APPLICATION DE PRESSION

(30) Priorität: 21.09.1998 DE 19843109
(43) Veröffentlichungstag der Anmeldung: 18.07.2001
(73) Patentinhaber: Advanced Design Concepts GmbH, 30156 Hannover (DE)
(72) Erfinder: Wagner, Werner, 07409 Alcudia (ES)
(74) Vertreter: Hoffmeister, Helmut, Dr. Dipl.-Phys.
(86) Internationale Anmeldenummer: EP9906739
(87) Internationale Veröffentlichungsnummer: WO0016965

(56) Entgegenhaltungen:
- DE-C- 19 524 076
- DE-C- 19 812 097
- US-A- 1 881 337
- US-A- 4 308 649

## Beschreibung

Die Erfindung betrifft ein Verfahren zur Herstellung eines oberflächenstrukturierten, folienartigen Halbzeugs aus einem Thermoplasten, bei dem ein thermoplastisches Kunststoffmaterial in geschmolzenem Zustand oder in Form einer Folie auf eine in ihrer Temperatur einstellbare, gegenüber der erwünschten Struktur als Negativstruktur (Matrix) ausgearbeitete Oberfläche mit gegenüber dem Kunststoffmaterial geringer Adhäsionsneigung und mit zahlreichen feinen Kavitäten aufgebracht und wenigstens im Kontakbereich mit der Oberfläche auf Schmelztemperatur gehalten wird. Das verformte thermoplastische Kunststoffmaterial wird - noch auf der Oberfläche liegend - durch Abkühlung zum Erstarren gebracht, wobei es auf der mit der Oberfläche in Kontakt gebrachten Seite die entsprechende Flächenstruktur annimmt. Das erstarrte Kunststoffmaterial wird von der Oberfläche als strukturierte Folie abgezogen, wobei das in die Kavitäten eingebrachte Material einen aus Vorsprüngen und Noppen bestehenden Flor bildet. Die Erfindung bezieht sich ferner auf nach dem Verfahren hergestellte Produkte sowie auf eine Vorrichtung zur Durchführung des Verfahrens.

Aus der Patentschrift DE 195 24 076 C1 ist bekannt, oberflächenstrukturierte, folienartige Halbzeuge aus einem Thermoplasten dadurch herzustellen, daß das thermoplastische Kunststoffmaterial in geschmolzenem Zustand auf eine zylindrische, drehbare und in ihrer Temperatur einstellbare Walzenoberfläche extrudiert wird, wobei das thermoplastische Kunststoffmaterial die Oberflächenstruktur der Walzenoberfläche satt kontaktiert. Das geschmolzene thermoplastische Kunststoffmaterial wird durch Abkühlen zum Erstarren gebracht und von der Walzenoberfläche abgezogen. Hierbei ergibt sich entsprechend den vorhandenen feinen Kavitäten eine entsprechende noppenartige oder florartige Oberfläche des entstandenen folienartigen Halbzeugs. Es ist weiterhin bekannt, Kunststoffolien zu prägen oder im Tiefziehverfahren zu verformen.

Es hat sich herausgestellt, daß es sehr schwierig ist, mit dem genannten Verfahren die Oberseite einer Kunststoffolie mit sehr feinen Vorsprüngen und Noppen, beispielsweise in der Größenordnung 3 000 bis 20 000 Stück pro cm², zu belegen. Aus den tiefen Kavitäten des Werkzeugs lassen sich die Folienhärchen nur sehr schwer herausziehen. Erfahrungsgemäß bleibt immer ein gewisser Prozentsatz an Kunststoff-Folienhärchen in den Kavitäten hängen, so daß diese beim nächsten Arbeitsgang für eine Vorsprungformung ausfallen und damit nach kurzer Zeit das entstandene Produkt nicht mehr brauchbar ist.

Es stellt sich demnach die Aufgabe, aus einem Thermoplasten im Gieß- oder Auflegverfahren ein Halbzeug herzustellen, bei dessen Verfahrensschritten es nicht zu Abrissen der in den feinen Kavitäten entstandenen Vorsprüngen oder Noppen kommt, sondern bei dem eine geschlossene Oberfläche in vielen Arbeitsgängen gleichmäßig erstellbar ist.

Diese Aufgabe wird mit Hilfe eines Verfahrens gelöst, das folgende Verfahrensschritte aufweist:
- ein thermoplastisches Kunststoffmaterial wird in geschmolzenem Zustand oder in Form einer Folie auf eine in ihrer Temperatur einstellbare, gegenüber der erwünschten Struktur als Negativstruktur (Matrix) ausgearbeitete Oberfläche (5) mit gegenüber dem Kunststoffmaterial geringer Adhäsionsneigung und mit zahlreichen feinen Kavitäten in Form von Sackbohrungen aufgebracht und wenigstens im Kontaktbereich mit der Oberfläche auf Schmelztemperatur gehalten,
- durch Druck auf das Kunststoffmaterial wird dieses in die Kavitäten unter Kompression des in den Kavitäten vorhandenen Restvolumens eingedrückt, so daß die Matrix gefüllt wird, die Kavitäten jedoch vom thermoplastischen Kunststoffmaterial nur teilweise ausgefüllt werden,
- das verformte thermoplastische Kunststoffmaterial wird - noch auf der Oberfläche liegend - durch Abkühlung zum Erstarren gebracht, wobei es auf der mit der Oberfläche in Kontakt gebrachten Seite die entsprechende Flächenstruktur annimmt,
- der Druck auf das Kunststoffmaterial wird aufgehoben, wodurch die im Inneren der Kavitäten komprimierte Luft das Kunststoffmaterial wenigstens teilweise herausdrückt,
- das erstarrte Kunststoffmaterial wird von der Oberfläche als strukturierte Folie abgezogen, wobei das in die Kavitäten eingebrachte und aus diesen herausgezogene thermoplastische Material einen aus Vorsprüngen und Noppen bestehenden Flor bildet.

Insbesondere durch Druck auf das Kunststoffmaterial wird dieses in die Kavitäten unter Kompression des in den Kavitäten vorhandenen Restvolumens eingedrückt, wobei Überdrücke von 2 bis 5 bar entstehen können, so daß die Matrix gefüllt wird, die Kavitäten jedoch vom thermoplastischen Kunststoff' material teilweise ausgefüllt werden. Wird der Druck auf das Kunststoffmaterial aufgehoben, so expandiert die im Inneren der Kavitäten komprimierte Luft und drückt das Kunststoffmaterial teilweise aus den Kavitäten heraus. Da die Vorsprünge und Noppen mit den übrigen Kunststoffmaterialien in Verbindung stehen, ist es nunmehr leicht, die zum Abriß neigenden Vorsprünge und Noppen herauszuziehen.

Dabei wird vorausgesetzt, daß es sich bei der Matrix um eine solche handelt, die eine geringe Adhäsionsneigung gegenüber dem verwendeten Kunststoffmaterial aufweist. Hierbei wird insbesondere an Matrizen gedacht, die als Vollkörper aus einem PTFE-Kunststoff an sich bekannter Art hergestellt sind.

Derartige Walzen sind in einer Grundversion in der Patentschrift DE 195 24 076 beschrieben. Ein Einbringen der feinen Kavitäten kann beispielsweise mit Hilfe einer Laser-Bohrvorrichtung durchgeführt werden. Insbesondere eignen sich zur Durchführung des Verfahrens Walzen mit Stahlkernen, die eine 0,5 bis 10 mm starke Kunststoffschicht aus einem Fluorkunststoff aufweisen. Ein solcher Fluorkunststoff kann beispielsweise Polyfluorethylen oder ein Fluor-Kautschuk sein, wie er unter dem Produktnahmen VITON_{TM} von Du Pont angeboten wird.

Die Kunststoffschicht muß eine Dauerbelastung von 200° bis 250°C im Walzenbetrieb aushalten können. Andere geeignete Kunststoffe zur Walzenbeschichtung können auch aus der Gruppe der Polyimide oder Polysulfone gewählt werden. Insgesamt aus Stahl oder aus Stahl mit einer Metall- oder Legierungsbeschichtung bestehende Walzen sind auch einsetzbar.

Als zu verarbeitendes Kunststoffmaterial können Thermoplasten ausgewählt , wie sie üblicherweise bekannt sind und beispielhaft in Unteranspruch 2 genannt sind.

Das Abziehen der strukturierten Folie geschieht bei einer Temperatur von 40° bis 60°C, so daß die Folie noch eine etwas weiche und leicht zu verarbeitende Konsistenz besitzt. Die Temperatur selbst, die das Gießen oder Schmelzen des Kunststoffes ermöglicht, ist üblichen Herstellerangaben zu entnehmen und von Fall zu Fall verschieden.

Vorzugsweise wird der Druck auf das Kunststoffmaterial in einem Walzenspalt, d. h. durch eine auf das Kunststoffmaterial drückende Walze, aufgebracht..

Vorzugsweise ist die Länge der Vorsprünge und Noppen zwischen 50 und 200 µm. Dabei entspricht die Länge der Vorsprünge und Noppen 20 bis 60 % der Tiefe der Kavitäten. Die Besetzungsdichte an Vorsprüngen bzw. Haarfasern liegt vorzugsweise zwischen 3.000 und 20.000 Stück pro cm².

Eine wesentliche Erweiterung erfährt das Verfahren durch den Verfahrensschritt, daß die den Flor bildenden Vorsprünge durch Kämmen, Bürsten, Rakeln und/oder Scherquetschen gereckt werden und dabei im Mittel die Länge der Vorsprünge des Flors um wenigstens das Zweifache der Ursprungslänge vergrößert wird und ein auf wenigstens einer Seite faserartig strukturiertes Halbzeug entsteht, bei dem die Vorsprünge zu Haarfasern gelängt sind. Diese Verfahrensschritte werden durch Verfahrensvarianten gemäß den Unteransprüchen 10 bis 16 beschrieben.

Eine Vorrichtung zur Durchführung des Verfahrens ist dadurch gekennzeichnet, daß ein Walzenpaar vorgesehen ist, von dem die eine Walze eine in ihrer Temperatur einstellbare, gegenüber der erwünschten Struktur als Negativstruktur (Matrix) ausgearbeitete Oberfläche besitzt, die mit gegenüber dem Kunststoffmaterial geringer Adhäsionsneigung und mit zahlreichen feinen Kavitäten in Form von Sackbohrungen ausgestattet ist und die auf einem Teil ihrer Oberfläche auf die Schmelztemperatur des zur Verwendung kommenden Thermoplasten erhitzt werden kann. Mit der zweiten, vorzugsweise ebenfalls beheizten Walze des Walzenpaars ist das Kunststoffmaterial in die Strukur der erhitzten Walze eindrückbar. Vorhanden ist weiterhin eine Kühlvorrichtung, mit der die Walzenoberfläche und das darauf liegenden Kuststoffmaterial nach Durchlauf durch den Walzenspalt kühlbar ist, und eine Abzugsvorrichtung, mit der die erstarrte strukturierte Folie abziehbar ist.

Üblicherweise wird also mit zwei Walzen gearbeitet, von denen die Matrixwalze bei einer Temperatur von 40°C gelassen wird und die zweite glatte Stahlwalze z.B.bei Polyethylen auf einer Temperatur von 140° ± 5°C gehalten ist. Die Folie wird damit aufheizt; durch Strahlungshitze wird die Kunststofffolie zusätzlich erweicht und auf 145°C gebracht. Im Walzenspalt wird die Kunststoffmasse in die Matrix und in die Kavitäten gedrückt und kühlt sich dadurch ab.

Weitere Merkmale, die sich auf die Vorrichtung zur Durchführung des Verfahrens beziehen, werden anhand von Ausführungsbeispielen erläutert.

Produkte, die nach dem Verfahren hergestellt sind, können als Mono- oder Multilayerprodukte sowie als Vorprodukt und als Endprodukt mit gelängten Fasern hergestellt werden.

Es ist möglich, daß die mit Flor versehene Schicht aus einem in der Wärme leichter fließenden Polymer aus einem hochviskoseren Polymer besteht.

Auch kann die dem Faserflor abgewandte Seite mit einem Trägermaterial, beispielsweise Gewebe, Gewirke oder Vliesstoff verbunden sein.

Die Beschreibung eines Ausführungsbeispiels der Erfindung erfolgt anhand der Zeichnung. Die Figuren der Zeichnung zeigen im einzelnen :
- Fig. 1: in schematischer Seitenansicht eine Vorrichtung zur Herstellung eines thermoplastischen Halbzeugs;
- Fig. 2: ein Herstellungsverfahren mit einer flach liegenden Halbzeug-Anordnung;
- Fig. 3: einen Schnitt durch eine Halbzeug-Schichtung gemäß einer vorzugsweisen Ausführungsform.

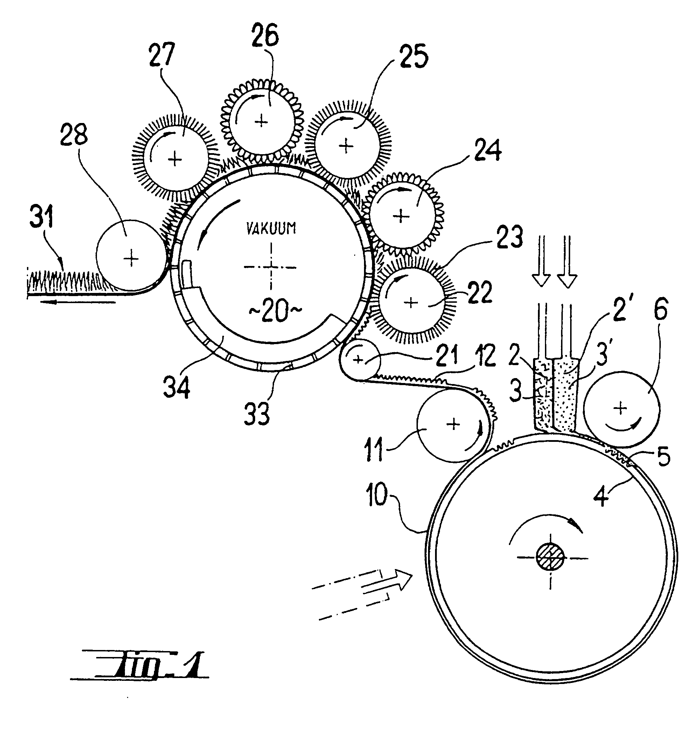

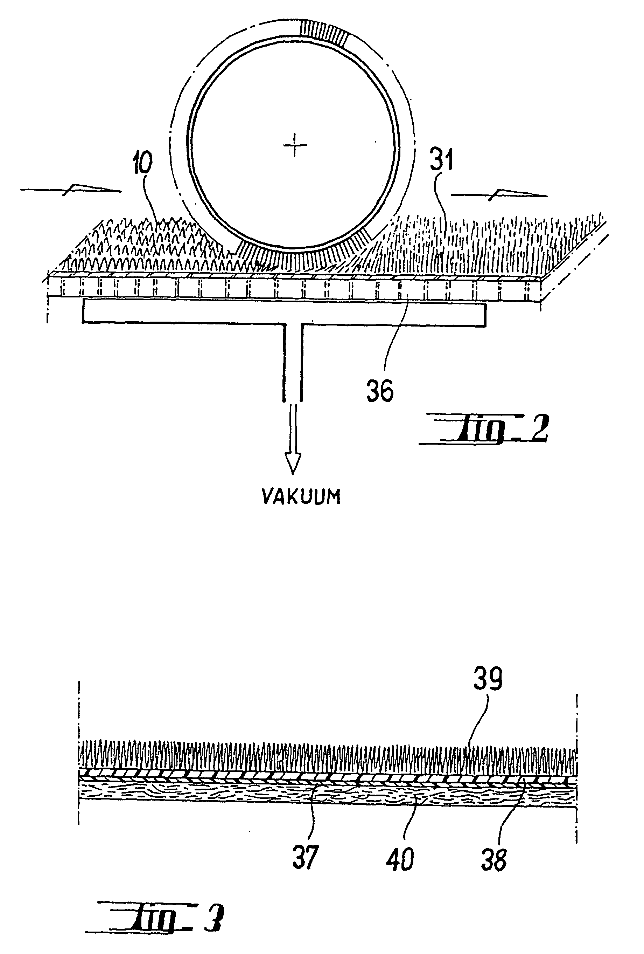

Fig. 1 zeigt eine Vorrichtung zur Herstellung eines folienartigen Halbzeugs in verschiedenen Stufen. Im Ausführungsbeispiel wird zunächst ein zweischichtiges Zwischenerzeugnis mit einer Noppenstruktur aus Polyethylen erzeugt.

Aus zwei Einschneckenextrudern (nicht dargestellt) wird aufgeschmolzenes und homogenisiertes Material über eine Mehrwegdüse mit den Mündungen 2 bis 2' eingespeist. Es wird dabei in den Extrudern ein Kompressionsverhältnis von 1 : 2,5 und eine Schneckentemperatur von 250°C eingehalten. Die beiden Polyethylen-Schmelzen 3, 3' werden unter konstantem Druck auf eine Chillroll-Matrixwalze 4 aufgebracht.

Die drehbare Matrixwalze 4, die mit einer negativ strukturierten Matrix 5 versehen ist, besitzt zahlreiche feine Kavitäten. Die gesamte Oberfläche der Matrix 5 besteht aus einem Mantel von etwa 2 mm Dicke aus einem PTFE-Kunststoff, der neben einer Narbungsstruktur noch zahlreiche feine Kavitäten in Form von Sacklöchern umfaßt, die jeweils über eine Laserbohrung geschaffen sind und eine Tiefe von 400 bis 600 µm aufweisen. Der Oberflächendurchmesser beträgt etwa 40 bis 70 µm.

Die auf die Walzenoberfläche aufgebrachte Kunststoffschmelze wird mit Hilfe einer Andruckwalze 6 unter hohem Anpreßdruck auf die Oberfläche der Matrixwalze aufgedrückt. Dabei dringt die Schmelze in die vorhandenen Kavitäten ein, wobei das in den Kavitäten vorhandene Luft-Restvolumen komprimiert wird und sich die Kavitäten teilweise mit thermoplastischem Kunststoffmaterial unter relativ hohem Druck ausfüllen. Der angewandte Druck liegt etwa zwischen 3 bis 10 bar.

Bei der hier vorgeschlagenen Mehrschichtextrusionsanlage wird für das Material, das unmittelbar mit der Matrixwalze in Kontakt tritt und in die Kavitäten eindringt, ein relativ leicht fließendes Polyethylen verwendet, während die obere Schicht durch ein die Festigkeit ausbildendes, wenigter gut fließendes Polyethylen verwendet wird. Die aus dem Walzenspalt austretende Folie hat eine Gesamtstärke von etwa 60 bis 80 µm. Dabei sollte die sich ausbildende Florschicht mindestens 40 µm stark sein. Für letztere ein LLDP-Polymer mit mittlerem Molekülgewicht mit einem Schmelzindex MFI 30, gemessen bei 190°C/2,16 g, 10 Minuten, und einer Dichte von 0,8955 verwendet.

Für die Festigkeitsschicht werden Mischungen aus Polyethylen verwendet, die eine relativ hohe Zähigkeit ergeben. Die Rezepturen enthalten weiter die üblichen Gleitmittel, Stabilisatoren, Pigmente und dgl. Additive.

Das verformte thermoplastische Kunststoffmaterial wird - noch auf der Oberfläche der Matrixwalze liegend - durch Abkühlung zum Erstarren gebracht. Dies erfolgt beispielsweise durch ein Wasserbad oder durch Kühlluft. Auf der mit der Matrix 5 in Kontakt gebrachten Seite nimmt demnach das Material die entsprechende Flächenstruktur an.

Über eine Abzugswalze 11 wird das erstarrte Kunststoffmaterial von der Oberfläche der Walze 4 abgezogen und als Zwischenerzeugnis 10 weiterverarbeitet. Mit der strukturierten Oberfläche nach außen wandert das Zwischenerzeugnis gegen eine weitere rotierende Trommel 20, die mit einer Temperatur von etwa 40 bis 80°C beheizt ist. In diesem Zustand hat das Zwischenerzeugnis, das von der Matrixwalze 4 abgezogen wird, zunächst noch einen auf der Oberfläche liegenden, wenig ausgeprägten Flor 12, der von zahlreichen Noppen und Vorsprüngen gebildet ist. Die Höhe des Flors, gemessen von der Oberfläche aus, beträgt etwa 100 bis 120 µm, wenn eine Kavitätentiefe von 400 µm zugrunde gelegt wird. Für bestimmte Zwecke kann das Zwischenerzeugnis 10 bereits als Endprodukt verwendet werden.

Soll jedoch eine Nachbehandlung dahingehend erfolgen, daß eine mit langen Fasern ausgebildete Faserstruktur erzeugt wird, so wird auf der rotierenden Trommel 20 eine Nachbehandlung zur Erzeugung eines Velourcharakters auf der Oberfläche der Folie vorgenommen.

Über eine Anpreßwalze 21 wird das Zwischenerzeugnis 10 gegen die Mantelfläche der rotierenden Trommel 20 geführt und dort mittels Vakuum fixiert. Im Verlauf der sukzessiv durchlaufenen Arbeitsstationen wird zunächst das Zwischenerzeugnis von einer ersten Rauhwalze 22 bearbeitet, die Rauhwalze 22 ist mit Metallkratzern 23 besetzt, die durch Ergreifen und entsprechendes Längen der Noppen und Vorsprünge eine Erstreckung derselben um das Zwei- bis Zwanzigfache ergeben. Aus den relativ "pummeligen" Noppenvorsprüngen werden dann faserartige, gestreckte Gebilde mit einer Faserlänge von 250 bis 400 µm.

Die weitere Bearbeitung des Zwischenerzeugnisses erfolgt in mehreren Stufen. An die Rauhwalze 22 schließt sich eine Kämmwalze 24 an, mit der das hochgerissene und zu längeren Haarfasern gelängte Material gekämmt und in eine bestimmte Richtung gelegt werden. An diesen erfolgt durch eine zweite Rauhwalze, die ähnlich aufgebaut ist wie die Rauhwalze 22, ein weiteres Längen und Strecken der Vorsprünge, Noppen und Haarfasern. Daran schließt sich wiederum eine Kämmwalze 26 an. Auf diese folgt eine weitere Rauhwalze 27. Am Schluß ergibt sich ein sehr faseriges, fast vliesartiges Gebilde, bei dem jedoch nur die Oberfläche entsprechend behaart ist, ohne daß, wie beim Rauhen von Textilien, das Grundgewebe angegriffen ist. Über eine weitere Umlenkwalze 28 wird nun das fertige Halbzeug abgezogen und einem Vorratsbehälter oder einer Schneidstation zugeführt.

Anstelle der Rauhbürsten 22 können auch andere Bürsten oder Kratzen verwendet werden, mit denen die Vorsprünge gelängt oder gestreckt werden können. Wesentlich ist, daß die anfänglich vorhandene relativ flache Struktur durch das Bürsten oder durch ein Scherquetschen geregelt wird, wobei im Mittel die Länge der Vorsprünge des Flors um mindestens das Zweifache der Ursprungslänge vergrößert wird. Im allgemeinen werden wesentlich höhere Werte erreicht. Die Vorsprünge werden um mehr als das Zehnfache gestreckt.

Ist eine Nachbehandlung nicht erwünscht, so können auch sehr dünne, elastische Folien von 40 bis 80 µm als Erzeugnis direkt von der Walze 4 abgezogen werden. Im Prinzip können alle Kunststoffe, die eine Folie mit thermoplastischer umformbarer Oberfläche ergeben, nach dem genannten Verfahren in Velourfolien umgewandelt werden, d. h. einschichtige und mehrschichtige Extrusionsfolien, geblasene, gegossene Folien, sowie Kombinationsfolien auf Basis der verschiedensten Polymerklassen. Vorzugsweise wird in diesen Fällen eine bereits fertig geblasene oder extrudierte Folie von einem Vorrat auf die Walze aufgebracht, wobei anstelle der beiden Extruderköpfe eine (nicht dargestellte) erste Umlenk- und Andrückwalze tritt.

Auf dem Walzenmantel liegend lassen sich dann die Folien mit dem Spalt zwischen den beiden Walzen 4 und 6 zuführen und dort in die Sacklöcher-Kavitäten eindrücken.

Als Materialien haben sich Polyolefine, insbesondere Polyethylen, Polypropylen, Polybutylen und Polyisopropylen, sowie deren Abmischungen oder Copolymere als günstig erwiesen. Aber auch Kunststoffe wie Polyester, Polyesterether, Polyamide, Polyurethane, Polyvinylalkohol, Polyvinylchlorid, Polysulfone, ABS, ASA, Polyisopropylen, Polycarbonate sowie deren Mischungen und Copolymerisate lassen sich einsetzen.

Entsprechenden Tabellenwerken oder Versuchsprotokollen sind die empirisch ermittelten Schmelzpunktwerte zu entnehmen.

Dabei muß die Bearbeitungsweise wenigstens im Kontaktbereich mit der Oberfläche auf Schmelztemperatur gehalten werden. Dies geschieht insbesondere durch Kontaktwärme, z. B. über zusätzliche Heizwalzen, oder aber über Strahlungsenergie, Ultraschall oder Mikrowellen.

Vor dem Abzug vom Umformungswerkzeug, hier der Walze 4, wird die Noppenfolie abgekühlt.

Es soll nicht ausgeschlossen werden, daß auch ein diskontinuierliches Verfahren angewendet wird, wobei auf einer flach liegenden Fläche jeweils eine Folie oder ein Kunststoff ausgebreitet werden, die dann mit Hilfe einer Druckplatte oder Druckwalze in die Kavitäten eingedrückt werden und jeweils als Flächen-Charge abgezogen werden.

Die Matrixwalze 4 besteht z. B. aus einer Stahlwalze, die beheizbar und kühlbar ist und die auf ihrer Oberfläche eine mehrere Millimeter starke Schicht aus einem sehr hochwertigen Fluorkautschuk trägt, wie er beispielsweise unter dem Markennamen Viton der Firma Dupont im Handel ist. In diese Fluorkautschukschicht werden mittels Laserbohrungen die gewünschten Kavitätenstrukturen eingebracht. Eine Dichte von 2500 bis 3000 Bohrungen pro cm² können ohne weiteres erreicht werden.

Die Folie wird durch eine Vorheizwalze auf 140°C gebracht. Durch eine zusätzliche Strahlbeheizung kann die dem Werkzeug zugekehrte Seite noch aufgeheizt werden auf 145°C. Die Matrixwalze selbst wird auf lediglich 60°C gehalten, durch den Anpreßdruck von etwa 10 bar wird die Folie veranlaßt, in die Kavitäten der Werkzeugwalze einzudringen.

Die Noppen haben eine Länge von zunächst 120 bis 120 µm.

Die nach dem Verfahren gewonnenen Folien können als textiles Backsheet auf dem Hygienesektor verwendet werden, aber auch als Einsatz für Obermaterialien in der Möbelindustrie. Die Folie kann auch weiterbehandelt werden durch Imprägnieren, Perforieren, Verstricken usw.. Auch eine Bedruckung ist möglich. Durch eine entsprechende Narbenstruktur läßt sich die Haptik und das Aussehen der Folie weiter verbessern.

## Patentansprüche

1. Verfahren zur Herstellung eines oberflächenstrukturierten, folienartigen Halbzeugs aus einem Thermoplasten, mit folgenden Verfahrensschritten:
- ein thermoplastisches Kunststoffmaterial wird in geschmolzenem Zustand oder in Form einer Folie auf eine in ihrer Temperatur einstellbare, gegenüber der erwünschten Struktur als Negativstruktur (Matrix) ausgearbeitete Oberfläche (5) mit gegenüber dem Kunststoffmaterial geringer Adhäsionsneigung und mit zahlreichen feinen Kavitäten in Form von Sackbohrungen aufgebracht und wenigstens im Kontaktbereich mit der Oberfläche auf Schmelztemperatur gehalten,
- durch Druck auf das Kunststoffmaterial wird dieses in die Kavitäten unter Kompression des in den Kavitäten vorhandenen Restvolumens eingedrückt, so daß die Matrix gefüllt wird, die Kavitäten jedoch vom thermoplastischen Kunststoffmaterial nur teilweise ausgefüllt werden,
- das verformte thermoplastische Kunststoffmaterial wird - noch auf der Oberfläche liegend - durch Abkühlung zum Erstarren gebracht, wobei es auf der mit der Oberfläche in Kontakt gebrachten Seite die entsprechende Flächenstruktur annimmt,
- der Druck auf das Kunststoffmaterial wird aufgehoben, wodurch die im Inneren der Kavitäten komprimierte Luft das Kunststoffmaterial wenigstens teilweise herausdrückt,
- das erstarrte Kunststoffmaterial wird von der Oberfläche als strukturierte Folie abgezogen, wobei das in die Kavitäten eingebrachte und aus diesen herausgezogene thermoplastische Material einen aus Vorsprüngen und Noppen bestehenden Flor bildet.

2. Verfahren nach Anspruch 1, **dadurch gekennzeichnet, daß** als Kunststoffmaterial ein Thermoplast, ausgewählt aus der Gruppe Polyolefine, Polyisopropylen, Polyester, Polyvinylalkohole, Polyurethane, Polyätherester, Polyamide, Polyvinylchlorid, Polysulfone, Polycarbonate, ABS, ASA, Polyesteramide, sowie Mischungen oder Copolymerisate daraus, verwendet wird.

3. Verfahren nach Anspruch 1 oder 2, **dadurch gekennzeichnet, daß** das Abziehen der strukturierten Folie bei einer Temperatur von 40° bis 60°C geschieht.

4. Verfahren nach Anspruch 1 bis 3, **dadurch gekennzeichnet, daß** die abgezogene Folie auf einer Bearbeitungswalze fixiert wird.

5. Verfahren nach Anspruch 1, **dadurch gekennzeichnet, daß** der Druck auf das Kunststoffmaterial in einem Walzenspalt aufgebracht wird.

6. Verfahren nach Anspruch 1, **dadurch gekennzeichnet, daß** die Länge der Vorsprünge und Noppen zwischen 50 um und 200 µm ist.

7. Verfahren nach Anspruch 1 oder 6, **dadurch gekennzeichnet, daß** die Länge der Vorsprünge und Noppen 20 bis 60% der Tiefe der Kavitäten entspricht.

8. Verfahren nach Anspruch 1, **dadurch gekennzeichnet, daß** die Besetzungsdichte an Vorsprüngen bzw. Haarfasern zwischen 3.000 und 20.000 Stück pro cm² ist.

9. Verfahren nach wenigstens einem der vorhergehenden Ansprüche, **dadurch gekennzeichnet, daß** die den Flor bildenden Vorsprünge durch Kämmen, Bürsten, Rakeln und/oder Scherquetschen gereckt werden und dabei im Mittel die Länge der Vorsprünge des Flors um wenigstens das Zweifache der Ursprungslänge vergrößert wird und ein auf wenigstens einer Seite faserartig strukturiertes Halbzeug entsteht, bei dem die Vorsprünge zu Haarfasern gelängt sind.

10. Vorrichtung zur Durchführung der Verfahrens nach Anspruch 1 bis 8, **dadurch gekennzeichnet, daß** ein Walzenpaar (4, 6) vorgesehen ist, von dem die eine Walze eine in ihrer Temperatur einstellbare, gegenüber der erwünschten Struktur als Negativstruktur (Matrix) ausgearbeitete Oberfläche (5) besitzt, die mit gegenüber dem Kunststoffmaterial geringer Adhäsionsneigung und mit zahlreichen feinen Kavitäten in Form von Sackbohrungen ausgestattet ist und die auf einem Teil ihrer Oberfläche auf die Schmelztemperatur des zur Verwendung kommenden Thermoplasten erhitzt werden kann, wobei mit der zweiten Walze (6) des Walzenpaars das Kunststoffmaterial in die Struktur der erhitzten Walze eindrückbar ist, mit einer Kühlvorrichtung, mit der die Walzenoberfläche und das darauf liegende Kunststoffmaterial nach Durchlauf durch den Walzenspalt führbar ist, und mit einer Abzugsvorrichtung, mit der die erstarrte strukturierte Folie (10) abziehbar ist.

11. Vorrichtung nach Anspruch 10, **dadurch gekennzeichnet, daß** der Vorrichtung mit der Matrixoberfläche, z.B. der Walze, eine mit einer Arbeitsoberfläche versehene Vorrichtung (20) nachgeschaltet ist, auf der das Halbzeug derart fixierbar ist, daß die mit dem Faserflor zu bedeckende Seite des Halbzeugs freiliegt, und daß zum Kämmen. Bürsten, Rakeln und/oder Scherquetschen dienende Arbeitsvorrichtungen, wie Rauhkratzen, Kämmwalzen und dgl., im Bereich der Arbeitsoberfläche angeordnet sind, mit denen die Haarfasern herstellbar sind.

12. Folienhalbzeug, hergestellt als Mono- oder Multilayerprodukt nach wenigstens einem der vorstehenden Verfahrensansprüche 1 bis 9.

13. Folienhalbzeug nach Anspruch 12, bestehend aus zwei Schichten, **dadurch gekennzeichnet, daß** die mit Flor versehene Schicht aus einem in der Wärme leichter fließenden Polymer und die Rückseitenschicht aus einem hochviskoseren Polymer besteht.

14. Folienhalbzeug mit einem Faserflor, dessen mit dem Faserflor bedeckte Seite des Halbzeugs gerauht und dabei im Mittel die Länge der Fasern des Faserflors um wenigstens das Zweifache vergrößert ist.

15. Folienhalbzeug mit einem Faserflor, hergestellt, nach einem der vorstehenden Verfahrensansprüche, **dadurch gekennzeichnet, daß** die dem Faserflor abgewandte Seite mit einem Trägermaterial, beispielsweise Gewebe, Gewirke oder Vliesstoff, verbunden ist.

## Claims

1. A process for the production of a surface-structured film-like semi-finished product from a thermoplastic, with the following steps:
- a thermoplastic material is applied in melted form or in the form of a film onto a surface (5) the temperature of which is adjustable and which serves as a negative structure (matrix) for the desired structure, the said surface having low adhesion to the plastic material and numerous fine cavities in the form of blind holes, and is kept at melting temperature at least in the area of contact with the surface,
- the plastic material is pressed under pressure into the cavities with compression of the remaining volume in the cavities, so that the matrix is filled but the cavities are only partially filled by the thermoplastic material,
- the shaped thermoplastic material is solidified by cooling whilst still in contact with the surface, the said material assuming the corresponding surface structure on the side brought into contact with the surface,
- the pressure on the plastic material is released, whereby the air compressed within the cavities at least partially presses the plastic material out,
- the solidified plastic material is removed from the surface in the form of a structured film, the thermoplastic material introduced into and withdrawn from the cavities forming a pile consisting of projections and naps.

2. A process according to claim 1, **characterised in that** the plastic material used is a thermoplastic selected from the group of polyolefins, polyisopropylene, polyesters, polyvinyl alcohols, polyurethanes, polyether esters, polyamides, polyvinyl chloride, polysulphones, polycarbonates, ABS, ASA, polyester amides, and mixtures of copolymers thereof.

3. A process according to claim 1 or 2, **characterised in that** the removal of the structured film is effected at a temperature of 40° C to 60° C.

4. A process according to claims 1 to 3, **characterised in that** the removed film is fixed on a processing roller.

5. A process according to claim 1 **characterised in that** the pressure is applied to the plastic material in a roller nip.

6. A process according to claim 1, **characterised in that** the length of the projections and naps is between 50µm and 200µm.

7. A process according to claim 1 or 6, **characterised in that** the length of the projections and naps is from 20 to 60% of the depth of the cavities.

8. A process according to claim 1, **characterised in that** the density of the projections or hair fibres is between 3000 and 20000 per cm².

9. A process according to at least one of the preceding claims, **characterised in that** the projections forming the pile are erected by combing, brushing, application of a doctor blade, and/or squeegeeing, thus increasing the length of the pile projections on average by at least twice the original length, resulting in a semi-finished product structured in fibre form on at least one side, the projections being lengthened into hair fibres.

10. Apparatus for performing the process according to claims 1 to 8, **characterised in that** a pair of rollers (4, 6) is provided, of which one roller has a surface (5) the temperature of which is adjustable and which is formed as a negative structure (matrix) for the desired structure, said surface having low adhesion to the plastic material and being provided with numerous fine cavities in the form of blind holes, and which can be heated over part of its surface to the melting temperature of the thermoplastic material to be used, the plastic material being adapted to be pressed into the structure of the heated roller by the second roller (6) of the pair of rollers, and with a cooling device with which the roller surface and the plastic material situated thereon are cooled after passing through the roller nip, and with a removal device, by means of which the solidified structured film (10) is removable.

11. Apparatus according to claim 10, **characterised in that** the device with the matrix surface, for example the roller is followed by a device (20) which is provided with a working surface and on which the semi-finished product is so fixable that the side of the semi-finished product to be covered with the fibre pile is exposed and **in that** working devices for combing, brushing, application of a doctor blade and/or squeegeeing, such as cards, combing rollers and the like, are disposed in the region of the working surface with which the hair fibres can be produced.

12. A semi-finished film product made in the form of a mono- or multi-layer product according to at least one of the preceding claims 1 to 9.

13. A semi-finished film product according to claim 12, consisting of two layers, **characterised in that** the layer provided with the pile consists of a polymer which flows more freely when heated and the back layer consists of a highly viscous polymer.

14. A semi-finished film product with a fibre pile, in which the side of the semi-finished product covered with the fibre pile is roughened and thus the length of the fibres of the fibre pile is on average at least doubled.

15. A semi-finished film product with a fibre pile, produced according to any one of the preceding process claims, **characterised in that** the side remote from the fibre pile is connected to a carrier material such as a woven or knitted fabric or a nonwoven.

## Revendications

1. Procédé pour la fabrication d'un produit semi-fini en forme de feuille et structuré en surface à partir d'une matière thermoplastique comportant les étapes de procédé suivantes :
- une matière plastique thermoplastique est déposée, à l'état fondu ou sous forme d'une feuille, sur une surface (5) à température réglable qui a été élaborée en tant que structure de négatif (matrice) par rapport à la structure recherchée, qui présente une tendance à l'adhésion plus faible par rapport à la matière plastique et qui comporte de nombreuses cavités fines en forme de trou borgne et la matière plastique thermoplastique est maintenue à la température de fusion au moins dans la zone de contact avec la surface,
- par pression sur la matière plastique, cette dernière est empreinte dans les cavités sous la compression du volume résiduel se trouvant dans les cavités de telle manière que la matrice soit remplie mais que les cavités ne soient comblées que partiellement par la matière plastique thermoplastique,
- la matière plastique thermoplastique mise en forme est amenée à la rigidification par refroidissement - quand elle repose encore sur la surface -, en prenant la structure de surface correspondante sur la face mise en contact avec la surface,
- la pression sur la matière plastique est supprimée, grâce à quoi l'air comprimé à l'intérieur des cavités presse au moins partiellement la matière plastique vers l'extérieur, et
- la matière plastique rigidifiée est retirée de la surface en formant une feuille structurée, la matière plastique introduite dans les cavités et retirée de ces dernières formant un voile constitué de parties saillantes et de nopes.

2. Procédé selon la revendication 1, **caractérisé en ce que** l'on utilise, en tant que matière plastique, une matière thermoplastique choisie dans le groupe comprenant les polyoléfines, le polyisopropylène, le polyester, les alcools de polyvinyle, le polyuréthanne, le polyétherester, le polyamide, le chlorure de polyvinyle, le polysulfone, les polycarbonates, le styrène-acrylo-butadiène (ABS), l'acrylonitrile-styrène-acrylester (ASA), les polyamides d'ester ainsi que des mélanges ou des copolymérisats de ces corps.

3. Procédé selon la revendication 1 ou 2, **caractérisé en ce que** le retrait de la feuille structurée se produit à une température comprise entre 40 °C et 60 °C.

4. Procédé selon l'une quelconque des revendications 1 à 3, **caractérisé en ce que** la feuille retirée est fixée sur un cylindre de traitement.

5. Procédé selon la revendication 1, **caractérisé en ce que** la pression sur la matière plastique est exercée dans un espacement entre des cylindres.

6. Procédé selon la revendication 1, **caractérisé en ce que** la longueur des parties saillantes et des nopes est comprise entre 50 µm et 200 µm.

7. Procédé selon la revendication 1 ou 6, **caractérisé en ce que** la longueur des parties saillantes et des nopes correspond à une valeur comprise entre 20 et 60 % de l'épaisseur des cavités.

8. Procédé selon la revendication 1, **caractérisé en ce que** la densité du remplissage en parties saillantes ou en fibres de voile est comprise entre 3 000 et 20 000 pièces par cm².

9. Dispositif selon au moins l'une quelconque des revendications précédentes, **caractérisé en ce que** les parties saillantes formant le voile sont étirées par peignage, par brossage, par râclage et/ou par écrasement avec tonte et **en ce que**, de ce fait, au milieu, on augmente la longueur des parties saillantes du voile d'au moins le double de la longueur initiale et qu'il se crée un produit semi-fini qui est structuré avec des fibres sur au moins une de ses faces et dans lequel les parties saillantes sont arrivées à une forme de fibres de voile.

10. Dispositif pour la mise en oeuvre du procédé selon l'une quelconque des revendications 1 à 8, **caractérisé en ce que** l'on prévoit une paire de cylindres (4, 6) dont l'un des cylindres a une surface (5) à température réglable qui a été élaborée en tant que structure de négatif (matrice) par rapport à la structure recherchée, qui présente une tendance à l'adhésion plus faible par rapport à la matière plastique, qui comporte de nombreuses cavités fines en forme de trou borgne et qui peut être chauffée, sur une partie de sa surface, à la température de fusion de la matière thermoplastique qui est utilisée et **en ce que** la matière plastique peut être empreinte, au moyen du deuxième cylindre (6) de la paire de cylindres, dans la structure du cylindre chauffé, ledit dispositif comportant un dispositif de refroidissement au moyen duquel la surface du cylindre et la matière plastique reposant sur ce dernier peuvent être guidés après le passage à travers l'espacement entre les cylindres et un dispositif de tirage au moyen duquel on peut tirer la feuille structurée rigidifiée (10).

11. Dispositif selon la revendication 10, **caractérisé en ce qu'**en aval du dispositif comportant la surface de matrice, par exemple le cylindre, on dispose un dispositif (20) présentant une surface de travail sur laquelle le produit semi-fini peut être fixé de telle manière que la face du produit semi-fini qui doit être recouverte par le voile de fibres soit libre et **en ce que** l'on dispose, dans la zone de la surface de travail, des dispositifs de traitement qui servent à peigner, à brosser, à râcler et/ou à écraser avec tonte, tels que des cardes de grattage, des peignes circulaires et analogues, au moyen desquels on peut réaliser les fibres de voile.

12. Produit semi-fini en feuille, fabriqué sous la forme d'un produit monocouche ou multicouche selon au moins l'une quelconque des revendications précédentes 1 à 9.

13. Produit semi-fini en feuille selon la revendication 12, **caractérisé en ce que** la couche équipée de la toile est réalisée en un polymère s'écoulant facilement à la chaleur et **en ce que** la couche arrière est réalisée en un polymère très visqueux.

14. Produit semi-fini en feuille comportant un voile de fibres dont la face du produit semi-fini qui est recouverte par la toile de fibres est grattée et en ce que, de ce fait, la longueur des fibres du voile de fibres est augmentée au moins du double.

15. Produit semi-fini en feuille comportant un voile, fabriqué conformément à l'une quelconque des revendications de procédé précédentes, **caractérisé en ce que** la face opposée au voile de fibres est reliée à un matériau support, par exemple du tissu, du tissu à mailles ou une nappe de fibres.
